(19) Europäisches Patentamt
European Patent Office
Office européen des brevets

(11) **EP 2 636 564 A1**

(12) **EUROPEAN PATENT APPLICATION**
published in accordance with Art. 153(4) EPC

(43) Date of publication:
**11.09.2013 Bulletin 2013/37**

(51) Int Cl.:
***B60T 8/1755*** *(2006.01)* ***B62D 6/00*** *(2006.01)*

(21) Application number: **10859260.1**

(22) Date of filing: **04.11.2010**

(86) International application number:
**PCT/JP2010/069606**

(87) International publication number:
**WO 2012/060003 (10.05.2012 Gazette 2012/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **TOYOTA JIDOSHA KABUSHIKI
KAISHA
Toyota-shi, Aichi-ken, 471-8571 (JP)**

(72) Inventors:
• **NARITA, Tetsuhiro
Toyota-shi, Aichi 471-8571 (JP)**

• **TANIMOTO, Mitsutaka
Toyota-shi, Aichi 471-8571 (JP)**
• **FUJITA, Yoshitaka
Toyota-shi, Aichi 471-8571 (JP)**
• **TSUCHIYA, Yoshiaki
Toyota-shi, Aichi 471-8571 (JP)**

(74) Representative: **Winter, Brandl, Fürniss, Hübner,
Röss, Kaiser, Polte - Partnerschaft
Bavariaring 10
80336 München (DE)**

(54) **BRAKING CONTROL DEVICE**

(57) A braking control apparatus is mounted on a vehicle (10) provided with: a wheel angle varying device (400, 800) capable of changing a wheel angle of at least one of front wheels (FL, FR) and rear wheels (RL, RR), independently of steering by a driver for facilitating a change in the wheel angle; a braking force varying device (600) capable of changing a left-right braking force difference of at least one of the front wheels and the rear wheels; and a controlling device for controlling each of the wheel angle varying device and the braking force varying device. The braking control apparatus is provided with: a limiting device (100) for changing a limit of the left-right braking force difference of the at least one of the front wheels and the rear wheels in accordance with whether or not the wheel angle varying device can operate.

[FIG. 2]

## Description

Technical Field

The present invention relates to a braking control apparatus for controlling a braking force in a vehicle provided with various mechanisms such as, for example, an electronic controlled power steering (EPS), a variable gear ratio steering (VGRS), and an antilock brake system (ABS).

Background Art

As this type of apparatus, for example, there has been suggested an apparatus for controlling each of a front-wheel angle and a rear-wheel angle so as to cancel yaw moment caused by a braking force difference between left and right wheels if braking control is performed during traveling on a split road surface (refer to Patent document 1). Alternatively, there has been suggested an apparatus for suppressing generation of the yaw moment by controlling braking forces for wheels on a high-friction coefficient side to moderately increase depending on time if a braking operation is performed during the traveling on the split road surface (refer to Patent document 2).

Prior Art Document

Patent Document

Patent document 1: Japanese Patent Application Laid Open No. 2008-110710
Patent document 2: Japanese Patent Application Laid Open No. Hei 8-142841

Disclosure of Invention

Subject to be Solved by the Invention

However, the aforementioned background art has such a technical problem that there is room to improve the control of the braking force.
In view of the aforementioned problem, it is therefore an object of the present invention to provide a braking control apparatus capable of improving stability of a vehicle while ensuring the braking force.

Means for Solving the Subject

A braking control apparatus of the present invention, in order to solve the above-mentioned subject, mounted on a vehicle is provided with a wheel angle varying device capable of changing a wheel angle of at least one of front wheels and rear wheels, independently of steering by a driver for facilitating a change in the wheel angle, a braking force varying device capable of changing a left-right braking force difference of at least one of the front wheels and the rear wheels, and a controlling device for controlling each of the wheel angle varying device and the braking force varying device. The braking control apparatus is provided with a limiting device for changing a limit of the left-right braking force difference of the at least one of the front wheels and the rear wheels in accordance with whether or not the wheel angle varying device can operate.
According to the braking control apparatus of the present invention, the braking control apparatus is mounted on the vehicle provided with: the wheel angle varying device; the braking force varying device; and the controlling device for controlling each of the wheel angle varying device and the braking force varying device.
The wheel angle varying device can change the wheel angle of one or both of front wheels and rear wheels of the vehicle, independently of the steering by the driver for facilitating the change in the wheel angle. Here, the "steering by the driver" means operation of various steering input mechanisms, such as a steering wheel. Therefore, according to the wheel angle varying device, the wheel angle of at least one of the front wheels and the rear wheels can be changed to have a predetermined value, regardless of the operation of the steering wheel by the driver.
In other words, the wheel angle varying device is essentially different from a normal steering mechanism which takes a mechanical transmission path of a steering input transmitted from the steering input mechanisms to steered wheels (e.g. front wheels). However, from the viewpoint of a physical configuration, at least one portion of the wheel angle varying device may be shared or commonly owned by this type of steering mechanism. The wheel angle varying device may be, for example, a VGRS, an active rear steering (ARS), or both of them, or the like.

According to the wheel angle varying device, regarding the wheels which are a wheel angle control target (which can include the steered wheels, as the wheels mechanically coupled with the steering input mechanisms described above), the wheel angle is variable at least in a certain range, and it is thus possible to change a traveling direction of the vehicle, theoretically regardless of the steering input by the driver.

The braking force varying device can change the left-right braking force difference of the at least one of the front wheels and the rear wheels. Here, the braking force varying device can change the braking forces respectively applied to the plurality of wheels (including tires), individually for the plurality of wheels (i.e. independently of each other). The braking force varying device may be various electronic braking systems (ECBs) or the like, as a concept including, for example, the ABS.

The braking force varying device varies the braking forces as friction braking forces, which are respectively applied to the left and right wheels. By this, it is possible to obtain the same effect as that a driving force is relatively increased, for the wheels on the side that the applied braking force is small. In any case, if there is a braking / driving force difference between the left and right wheels, the vehicle turns to the side of the wheels that the braking force is relatively large (i.e. to the right if the braking force of the right-side wheel is large). Therefore, according to the braking force varying device, theoretically, the traveling direction of the vehicle can be changed, regardless of the steering input by the driver.

Incidentally, the left- right braking force difference is limited to ensure the stability of the vehicle. In other words, a range of the left- right braking force difference which can be changed by the braking force varying device is limited such that the stability of the vehicle is ensured.

The controlling device provided, for example, with a memory, a processor, and the like can control each of the wheel angle varying device and the braking force varying device. Specifically, for example, if control for bringing a trajectory of the vehicle close to a target driving route of the vehicle (e.g. lane keeping assist: LKA) is performed, the controlling device controls the wheel angle varying device and the braking force varying device, for example, such that a slip angle of the vehicle is a target slip angle and a yaw rate generated in the vehicle is a target yaw rate.

The limiting device provided, for example, with a memory, a processor, and the like changes the limit of the left-right braking force difference of the at least one of the front wheels and the rear wheels in accordance with whether or not the wheel angle varying device can operate. Here, the expression of "changing the limit of the left-right braking force difference" means mitigating or tightening the limit set in advance for the braking force varying device.

A case where the wheel angle varying device cannot operate typically means a case where communication becomes abnormal, for example, among an actuator, a sensor, an electronic control unit (ECU) and the like, which constitute the wheel angle varying device, (e.g. a situation in which the communication is lost, etc.).

Incidentally, a case where initialization of the sensor which constitutes the wheel angle varying device (e.g. determination of a wheel angle midpoint by predetermined learning processing, etc.) has not been completed may be also included in the case where the wheel angle varying device cannot operate.

If the braking forces are applied to the respective wheels and if the left-right braking force difference is changed by the braking force varying device, for example, so as to optimize a slip ratio for each wheel, then, yaw moment according to the left-right braking force difference is generated in the vehicle. If the wheel angle varying device can operate, the wheel angle can be changed by the wheel angle varying device so as to cancel the yaw moment caused by the left-right braking force difference (i.e. the wheel angle varying device and the braking force varying device can be cooperatively controlled). Thus, even if the left-right braking force difference has a relatively large value, the stability of the vehicle can be ensured. On the other hand, if the wheel angle varying device cannot operate, the wheel angle varying device and the braking force varying device cannot be cooperatively controlled. Thus, vehicle behavior likely becomes unstable due to the yaw moment caused by the left-right braking force difference, or the driver likely feels uncomfortable, unless the left-right braking force difference has a smaller value in comparison with the case where the wheel angle varying device can operate.

Thus, in the present invention, the limit of the left- right braking force difference of the at least one of the front wheels and the rear wheels is changed by the limiting device in accordance with whether or not the wheel angle varying device can operate. Therefore, if the wheel angle varying device can operate, it is possible to efficiently decelerate the vehicle while stabilizing the vehicle, and if the wheel angle varying device cannot operate, it is possible to ensure the stability of the vehicle although degree of the deceleration of the vehicle is more or less suppressed.

As a result, according to the braking control apparatus of the present invention, the limit of the left-right braking force difference is changed in accordance with whether or not the wheel angle varying device can operate, and it is thus possible to improve the stability of the vehicle while ensuring the braking forces according to circumstances.

In one aspect of the braking control apparatus of the present invention, said limiting device increases the limit of the left-right braking force difference of the at least one of the front wheels and the rear wheels in a case where the wheel angle varying device cannot operate, in comparison with the limit of the left-right braking force difference of the at least one of the front wheels and the rear wheels in a case where the wheel angle varying device can operate.

According to this aspect, in the case where the wheel angle varying device cannot operate, the limit of the left-right braking force difference is increased (i.e. tightened) in comparison with the case where the wheel angle varying device can operate. In other words, in the case where the wheel angle varying device can operate, the limit of the left-right braking force difference is reduced (i.e. mitigated) in comparison with the case where the wheel angle varying device cannot operate.

As described above, the vehicle can be efficiently decelerated if the wheel angle varying device can operate because the left-right braking force difference can be set to have a relatively large value. On the other hand, the left-right braking force difference is set to have a relatively small value if the wheel angle varying device cannot operate. It is thus possible to ensure the stability of the vehicle by suppressing the yaw moment caused by the left-right braking force difference.

In another aspect of the braking control apparatus of the present invention, said limiting device is provided with a judging device for judging whether or not the wheel angle varying device can operate, and does not provide a limit to the left-right braking force difference of the at least one of the front wheels and the rear wheels in a case where it is judged that the wheel angle varying device can operate and provides a limit to the left-right braking force difference of the at least one of the front wheels and the rear wheels in a case where it is judged that the wheel angle varying device cannot operate.

According to this aspect, it is possible to relatively easily judge whether or not the wheel angle varying device can operate, which is extremely useful in practice.

The expression "... does not provide a limit to the left-right braking force difference" does not mean unlimitation, but means that a limit exceeding the limit associated with the left-right braking force difference set in advance for the braking force varying device is not provided (i.e. it is less strict than the limit associated with the left-right braking force difference set in advance). On the other hand, the expression "... provides a limit to the left-right braking force difference" means that the limit associated with the left-right braking force difference set in advance is tightened.

Incidentally, in this aspect, the limit associated with the left- right braking force difference set in advance is provided on the premise that the yaw moment caused by the left- right braking force difference is canceled due to the change in the wheel angle by the wheel angle varying device.

In another aspect of the braking control apparatus of the present invention, the controlling device controls at least one of the wheel angle varying device and the braking force varying device on the basis of required vehicle behavior if predetermined vehicle behavior is required.

According to this aspect, the controlling device controls at least one of the wheel angle varying device and the braking force varying device so as to obtain the required vehicle behavior (e.g. a target yaw rate, a target slip angle, etc.), regardless of whether or not the wheel angle varying device can operate.

Incidentally, the "predetermined vehicle behavior" may be required by a trajectory control apparatus such as, for example, LKA, or may be required by a driver operating a steering wheel or the like. Moreover, the "predetermined vehicle behavior" means behavior which allows at least one of the yaw rate and the slip angle to be changed.

In another aspect of the braking control apparatus of the present invention, the controlling device is provided with a rapid deceleration requirement obtaining device for obtaining a requirement degree of rapid deceleration of the vehicle, and controls at least one of the wheel angle varying device and the braking force varying device on the basis of the obtained requirement degree of the rapid deceleration.

According to this aspect, the rapid deceleration requirement obtaining device provided, for example, with a memory a processor, and the like obtains the requirement degree of the rapid deceleration of the vehicle. Specifically, for example, the rapid deceleration requirement obtaining device calculates a time to when the vehicle crashes into an obstacle ahead, from a current velocity of the vehicle and a distance between the vehicle and the obstacle ahead of the vehicle (e.g. a vehicle moving ahead), and compares the obtained time with a threshold value, thereby obtaining the requirement degree of the rapid deceleration. Here, if a plurality of threshold values are set, the requirement degree of the rapid deceleration can be set in a stepwise manner.

Incidentally, the requirement degree of the rapid deceleration may be expressed, for example, as a ratio, a percentage, and the like, or may be evaluated with grades such as, for example, A, B, C and so on.

The controlling device controls at least one of the wheel angle varying device and the braking force varying device on the basis of the obtained requirement degree of the rapid deceleration, regardless of whether or not the wheel angle varying device can operate. Here, if the limiting device is configured to further mitigate the limit of the left-right braking force difference as the requirement degree (i.e. necessity) of the rapid deceleration becomes higher, then, the necessary braking forces can be ensured. In this case, the limiting device may change the degree of mitigating the limit of the left-right braking force difference, in accordance with whether or not the wheel angle varying device can operate. On the other hand, it is possible to further improve the stability of the vehicle as the requirement degree of the rapid deceleration becomes lower.

In another aspect of the braking control apparatus of the present invention, said limiting device changes the limit of the left-right braking force difference of the at least one of the front wheels and the rear wheels in accordance with the wheel angle varying device can operate when the vehicle is driving on a split-$\mu$ road surface.

According to this aspect, even if the vehicle is driving on the split-μ road surface having a specially large left-right braking force difference, it is possible to improve the stability of the vehicle while ensuring the braking forces according to circumstances. Incidentally, the "split-μ road" means a road having different friction coefficients between a road surface with which the wheels on one of the right and left sides of the vehicle are in contact and a road surface with which the wheels on the other side of the vehicle are in contact.

The operation and other advantages of the present invention will become more apparent from an embodiment explained below.

Brief Description of Drawings

[FIG. 1] FIG. 1 is a block diagram illustrating a configuration of a vehicle equipped with a braking control apparatus in a first embodiment.

[FIG. 2] FIG. 2 is a flowchart illustrating braking control processing performed by an ECU in the first embodiment.

[FIG. 3] FIGs. 3 are conceptual diagrams conceptually illustrating yaw moment generated in the vehicle in the first embodiment.

Mode for Carrying Out the Invention

Hereinafter, an embodiment of the braking control apparatus of the present invention will be explained with reference to the drawings.

<First Embodiment>

(Configuration of Vehicle)

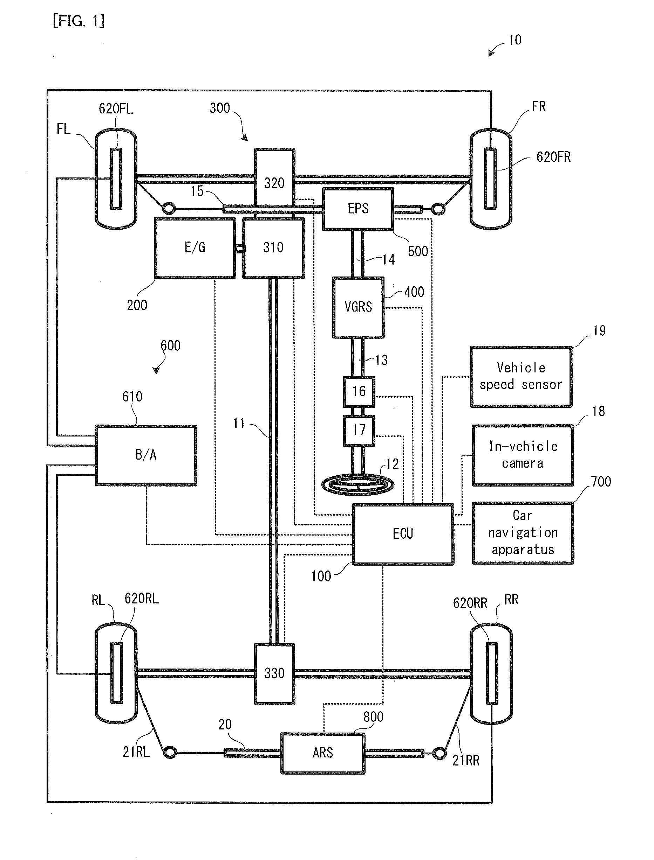

Firstly, a configuration of a vehicle in the first embodiment of the present invention will be explained with reference to FIG. 1. FIG. 1 is a block diagram illustrating the configuration of the vehicle equipped with the braking control apparatus in the first embodiment of the present invention. Incidentally, in FIG. 1, only members directly related to the first embodiment are illustrated and the illustration of other members is omitted.

In FIG. 1, a vehicle 10 is provided with wheels, which are a left front wheel FL, a right front wheel FR, a left rear wheel RL, and a right rear wheel RR. The vehicle 10 is configured to move in a desired direction by a wheel angle change (or rudder angle change) of the left front wheel FL and the right front wheel FR, which are steered wheels out of the wheels, and by a wheel angle change of the left rear wheel FL and the right rear wheel FR.

The vehicle 10 is provided with an ECU 100, an engine 200, a driving force distributing apparatus 300, a VGRS actuator 400, an EPS actuator 500, an ECB 600, a car navigation apparatus 700, and an ARS actuator 800.

The ECU 100, which is one example of the "controlling device" of the present invention, is provided with a central processing unit (CPU), a read only memory (ROM), and a random access memory (RAM), each of which is not illustrated. The ECU 100 is an electronic control unit capable of controlling all the operations of the vehicle 10.

The engine 200 is a power source for the vehicle 10. A crankshaft, which is a shaft for outputting a driving force of the engine 200, is connected to a center differential apparatus 310 as one constituent of the driving force distributing apparatus. Incidentally, since the detailed configuration of the engine 200 correlates weakly with the subject of the present invention, details thereof will be omitted herein.

The driving force distributing apparatus 300 can distribute engine torque transmitted through the aforementioned crankshaft from the engine 200, to the front wheels and the rear wheels at a predetermined ratio. The driving force distributing apparatus 300 is provided with the center differential apparatus 310 (hereinafter referred to as a "center differential 310" as occasion demands), a front differential apparatus 320 (hereinafter referred to as a "front differential 320" as occasion demands), and a rear differential apparatus 330 (hereinafter referred to as a "rear differential 330" as occasion demands).

The center differential 310 is a limited slip differential (LSD: a differential mechanism with a differential limiting function) for distributing the engine torque supplied from the engine 200, to the front differential 320 and the rear differential 330.

The center differential 310 distributes the engine torque to the front and rear wheels at a distribution ratio of (as one example but not limited to) 50:50 under the condition that loads acting on the front and rear wheels are substantially constant. Moreover, if a rotational speed of either one of the front and rear wheels is higher than that of the other, differential limit is performed such that differential limiting torque acts on the one wheels and the torque is transferred to the other wheels. In other words, the center differential 310 is a so-called rotational-speed-sensing (viscous coupling) differential mechanism.

Incidentally, the center differential 310 is not limited to such a rotational- speed- sensing differential mechanism, but may be a torque- sensing differential mechanism in which a differential limiting action increases in proportion to input torque. Moreover, it may be a distribution- ratio- variable differential mechanism in which a differential action is exerted by a planetary gear mechanism, in which the differential limiting torque is continuously changed by on- off control of an electromagnetic clutch, and in which a desired distribution ratio can be realized within a predetermined adjustable range. In any case, the center differential 310 may adopt various practical aspects regardless of being publicly known or unknown, as long as it can distribute the engine torque to the front wheels and the rear wheels.

The front differential 320 is a distribution-ratio-variable LSD capable of distributing the engine torque distributed to the side of a front axle (front wheel axle) by the center differential 310, further to the left and right wheels at a desired distribution ratio set within a predetermined adjustable range.

The front differential 320 is provided with: a planetary gear mechanism including a ring gear, a sun gear, and a pinion carrier; and an electromagnetic clutch for providing differential limiting torque. With the ring gear of the planetary gear mechanism, a differential case is coupled. With the sun gear and the carrier, the axle is coupled on either side. Moreover, the differential limiting torque is continuously controlled by electrification control for the electromagnetic clutch, and the distribution ratio of the torque is continuously variably controlled within a predetermined adjustable range which is determined in terms of physical and electrical configurations of the front differential 320.

The front differential 320 is electrically connected to the ECU 100, and the electrification control for the electromagnetic clutch is also controlled by the ECU 100. Therefore, the ECU 100 can generate a desired front wheel left-right driving force difference through drive control of the front differential 320.

Incidentally, the configuration of the front differential 320 is not limited to what is exemplified herein, but can have various aspects regardless of being publicly known or unknown, as long as it can distribute a driving force (incidentally, the torque and the driving force have a unique or unambiguous relation) to the left and right wheels at a desired distribution ratio. In any case, such a left- right driving force distributing action is publicly known, and details thereof are thus not mentioned herein to prevent a complicated explanation.

The rear differential 330 is a distribution-ratio-variable LSD capable of distributing the engine torque distributed to the side of a rear axle (rear wheel axle) through a propeller shaft 11 by the center differential 310, further to the left and right wheels at a desired distribution ratio set within a predetermined adjustable range.

The rear differential 330 is provided with: a planetary gear mechanism including a ring gear, a sun gear, and a pinion carrier; and an electromagnetic clutch for providing differential limiting torque. With the ring gear of the planetary gear mechanism, a differential case is coupled. With the sun gear and the carrier, the axle is coupled on either side. Moreover, the differential limiting torque is continuously controlled by electrification control for the electromagnetic clutch, and the distribution ratio of the torque is continuously variably controlled within a predetermined adjustable range which is determined in terms of physical and electrical configurations of the rear differential 330.

The rear differential 330 is electrically connected to the ECU 100, and the electrification control for the electromagnetic clutch is also controlled by the ECU 100. Therefore, the ECU 100 can generate a desired rear wheel left-right driving force difference through drive control of the rear differential 320.

Incidentally, the configuration of the rear differential 330 is not limited to what is exemplified herein, but can have various aspects regardless of being publicly known or unknown, as long as it can distribute a driving force (incidentally, the torque and the driving force have a unique or unambiguous relation) to the left and right wheels at a desired distribution ratio. In any case, such a left- right driving force distributing action is publicly known, and details thereof are thus not mentioned herein to prevent a complicated explanation.

The VGRS actuator 400 is a steering transmission ratio varying apparatus, provided with a housing, a VGRS motor, a reduction gear mechanism, and a locking mechanism (all of which are not illustrated). The VGRS actuator 400 is one example of the "wheel angle varying device" of the present invention.

In the VGRS actuator 400, the VGRS motor, the reduction gear mechanism and the locking mechanism are accommodated in the housing. The housing is fixed to an end on the downstream side of an upper steering shaft 13 coupled with a steering wheel 12 as a steering input device, and the housing can rotate substantially integrally with the upper steering shaft 13.

The VGRS motor is a DC brushless motor having a rotor as a rotator, a stator as a stationary part, and a rotating shaft as a shaft for outputting a driving force. The stator is fixed to the inside of the housing, and the rotor is rotatably held within the housing. The rotating shaft is coaxially rotatably fixed to the rotor and is coupled with the reduction gear mechanism at an end on the downstream side. To the stator, a drive voltage is supplied from a not-illustrated electric drive circuit.

The reduction gear mechanism is a planetary gear mechanism having a plurality of rotational elements which can perform differential rotation. One of the plurality of rotational element is coupled with the rotating shaft of the VGRS motor, and one of the other rotational elements is coupled with the aforementioned housing. Then, the remaining rotational element is coupled with a lower steering shaft 14.

According to the reduction gear mechanism having such a configuration, a rotational speed of the upper steering shaft 13 according to the operation amount of the steering wheel 12 (i.e. a rotational speed of the housing) and a rotational speed of the VGRS motor (i.e. a rotational speed of the rotating shaft) uniquely determine a rotational speed of the lower steering shaft 14 coupled with the remaining one rotational element.

At this time, it is possible to control an increase and a reduction in the rotational speed of the lower steering shaft 14 by controlling an increase and a reduction in the rotational speed of the VGRS motor by means of the differential action between the rotational elements. In other words, the upper steering shaft 13 and the lower steering shaft 14 can relatively rotate by the action of the VGRS motor and the reduction gear mechanism.

Incidentally, in terms of the configuration of each rotational element in the reduction gear mechanism, the rotational speed of the VGRS motor is transmitted to the lower steering shaft 14 in the state that it is reduced in accordance with a predetermined reduction ratio which is determined in accordance with a gear ratio between the rotational elements.

As described above, in the vehicle 10, since the upper steering shaft 13 and the lower steering shaft 14 can relatively rotate, a steering transmission ratio is continuously variable in a range set in advance, wherein the steering transmission ratio is a ratio between a steering wheel angle as a rotation amount of the upper steering shaft 13 and a wheel angle δf of the front wheels as the steered wheels, which is uniquely determined according to the rotation amount of the lower steering shaft 14 (which is also related to a gear ratio of a rack and pinion mechanism described later).

Incidentally, the locking mechanism is a clutch mechanism provided with a clutch element on the VGRS motor side and a clutch element on the housing side. In the condition that both the clutch elements engage with each other, the rotational speed of the upper steering shaft 13 matches the rotational speed of the rotating shaft of the VGRS motor. Thus, inevitably, the rotational speed of the lower steering shaft 14 also matches them. In other words, the upper steering shaft 13 and the lower steering shaft 14 are directly connected. The details of the locking mechanism correlate weakly with the first embodiment, and details thereof are thus omitted herein.

Incidentally, the VGRS actuator 400 is electrically connected to the ECU 100, and operation thereof is controlled by the ECU 100.

In the vehicle 10, the rotation of the lower steering shaft 14 is transmitted to the rack and pinion mechanism. The rack and pinion mechanism is a steering transmission mechanism including: a not-illustrated pinion gear connected to the lower steering shaft 14 at the end on the downstream side; and a rack bar 15 in which gear teeth engaging with the gear teeth of the pinion gear are formed. The rotation of the pinion gear is converted into a motion of the rack bar 15 in a horizontal direction in FIG. 1, by which a steering force is transmitted to each steered wheel via a tie rod and a knuckle (whose reference numerals are omitted) coupled with both ends of the rack bar 15.

The EPS actuator 500 is a steering torque assisting apparatus, provided with an EPS motor as a DC brushless motor including: a not-illustrated rotor as a rotator to which a permanent magnet is attached; and a stator as a stationary part which surrounds the rotor.

The EPS motor can generate EPS torque Teps in a direction of rotation of the rotor, which is rotated by the action of a rotating magnetic field formed in the EPS motor due to the electrification to the stator via a not-illustrated electric driving apparatus.

On the other hand, a not-illustrated reduction gear is fixed to a motor shaft as a rotating shaft of the EPS motor, and this reduction gear also directly or indirectly engages with a reduction gear disposed on the lower steering shaft 14. Thus, in the first embodiment, the EPS torque generated from the EPS motor functions as torque for assisting the rotation of the lower steering shaft 14. Thus, if the EPS torque is applied in the same direction of driver steering torque applied to the upper steering shaft 13 via the steering wheel 12, a driver's steering load is reduced by the amount of the EPS torque.

Incidentally, the EPS actuator 500 is a so-called electronically-controlled power steering apparatus for assisting the driver steering torque by using the torque of the motor which is electrically connected to the ECU 100 and whose operation is controlled by the ECU 100. However, a power steering apparatus provided for the vehicle 10 may be a so-called hydraulic power steering apparatus for reducing the driver's steering load by using a hydraulic driving force applied via a hydraulic driving apparatus.

The vehicle 10 is provided with a steering wheel angle sensor 16 and a steering torque sensor 17. The steering wheel angle sensor 16 is an angle sensor capable of detecting the steering wheel angle which indicates the rotation amount of the upper steering shaft 13. The steering wheel angle sensor 16 is electrically connected to the ECU 100, and the detected steering wheel angle is referred to by the ECU 100 with a regular or irregular period.

The steering torque sensor 17 is a sensor capable of detecting the driver steering torque applied via the steering wheel 12 from a driver. Explaining it more specifically, the upper steering shaft 13 has such a configuration that it is divided into an upstream part and a downstream part and that the parts are mutually coupled by using a not-illustrated torsion bar. To the both ends on the upstream side and the downstream side of the torsion bar, rings for detecting a rotational phase difference are fixed.

The torsion bar is twisted in its rotational direction in accordance with the steering torque (i.e. the driver steering torque) transmitted through the upstream part of the upper steering shaft 13 when the driver of the vehicle 10 operates the steering wheel 12, and the torsion bar can transmit the steering torque to the downstream part while generating the twist. Therefore, upon the transmission of the steering torque, there is the rotational phase difference between the rings for detecting the rotational phase difference described above.

The steering torque sensor 17 can detect the rotational phase difference, convert the rotational phase difference to the steering torque, and output it as an electrical signal corresponding to the driver steering torque. The steering torque sensor 17 is electrically connected to the ECU 100, and the detected driver steering torque is referred to by the ECU 100 with a regular or irregular period.

Incidentally, a method of detecting the steering torque is not limited to this type of torsion bar method, but may adopt another method.

The ECB 600 is an electronically-controlled braking apparatus as one example of the "braking force varying device" of the present invention, capable of applying a braking force individually to each of the left and right front and rear wheels of the vehicle 10. The ECB 600 is provided with: a brake actuator 610; and braking apparatuses 620FL, 620FR, 620RL, and 620RR corresponding to the left front wheel FL, the right front wheel FR, the left rear wheel RL and the right rear wheel RR, respectively.

The brake actuator 610 is a hydraulic control actuator configured to supply hydraulic oil individually to each of the braking apparatuses 620FL, 620FR, 620RL, and 620RR. The brake actuator 610 is provided with a master cylinder, an electric oil pump, a plurality of hydraulic transmission paths, an electromagnetic valve disposed in each of the hydraulic transmission paths, and the like, and it can control the opening/closing state of the electromagnetic valve, thereby controlling the hydraulic pressure of the hydraulic oil supplied to a wheel cylinder provided for each braking apparatus, individually in each braking apparatus. The hydraulic pressure of the hydraulic oil has a one-on-one relation with the pressing force of a braking pad provided for each braking apparatus, and the high and low hydraulic pressures of the hydraulic oil correspond to the large and small braking forces of each braking apparatus, respectively.

The brake actuator 610 is electrically connected to the ECU 100, and the braking force applied to each wheel from respective one of the braking apparatuses is controlled by the ECU 100. Incidentally, the ECB 600 limits a left-right braking force difference, for stability of the vehicle 10. In the first embodiment, the limit is set for the left-right braking force difference on the premise of cooperative control between active steering described later and the ECB 600.

The vehicle 10 is provided with an in-vehicle camera 18 and a vehicle speed sensor 19. The in-vehicle camera 18 is an imaging apparatus which is disposed on a front nose of the vehicle 10 and which can image a predetermined area ahead of the vehicle 10. The in-vehicle camera 18 is electrically connected to the ECU 100, and the imaged area ahead is sent out to the ECU 100 as image data with a regular or irregular period.

The ECU 100 can analyze the image data and obtain various data necessary for, for example, lane keeping assist (LKA) (steeling assistance for lane keeping driving) control. Incidentally, since various known aspects can be applied to the LKA, details of the LKA are not mentioned here to prevent a complicated explanation.

The vehicle speed sensor 19 is a sensor capable of detecting a vehicle speed as the speed or velocity of the vehicle 10. The vehicle speed sensor 19 is electrically connected to the ECU 100, and the detected vehicle speed is referred to by the ECU 100 with a regular or irregular period.

The car navigation apparatus 700 is an apparatus capable of providing various navigation information, including information about a position of the vehicle 10, information about a road around the vehicle 10 (a road type, a road width, the number of lanes, a speed limit, a road shape, etc.), traffic light information, information about various facilities located around the vehicle 10, traffic congestion information, environmental information, and the like, on the basis of signals obtained via a GPS antenna and a VICS antenna disposed in the vehicle 10. The car navigation apparatus 700 is electrically connected to the ECU 100, and the operation state thereof is controlled by the ECU 100.

The ARS actuator 800 is a rear wheel steering actuator as another example of the "wheel angle varying device" of the present invention, capable of changing a rear wheel angle, which is a wheel angle of the left rear wheel RL and the right rear wheel RR, independently of a steering input given by the driver via the steering wheel 12.

The ARS actuator 800 has an ARS motor and a reduction gear mechanism which are built therein, and a drive circuit of the ARS motor is electrically connected to the ECU 100. Therefore, the ECU 100 can control ARS torque, which is output torque of the ARS motor, by controlling the drive circuit.

On the other hand, the reduction gear can transmit the torque of the ARS motor to a rear steering rod 20 with deceleration.

The rear steering rod 20 is coupled with the left rear wheels RL and the right rear wheel RR via joint members 21RL and 21RR, respectively. If the rear steering rod 20 is driven by the ARS torque in a horizontal one direction illustrated, each of the rear wheels is steered in one direction.

Incidentally, the ARS actuator 800 may be provided with a direct acting mechanism capable of converting a rotary motion into a stroke motion. If this type of direct acting mechanism is provided, the rear steering rod 20 may change the wheel angle of the rear wheels in accordance with the stroke motion in the horizontal direction of this direct acting mechanism.

Incidentally, the practical aspect of the rear wheel steering apparatus is not limited to that of the ARS actuator 800 illustrated, as long as it can make the rear wheel angle variable in a predetermined range.

Incidentally, the vehicle 10 in the first embodiment can control the wheel angles of the front and rear wheels independently of the steering input from the driver's side by using the VRGS actuator 400 and the ARS actuator 800; however, the vehicle of the present invention is not limited to such a vehicle configuration. For example, the vehicle of the present invention may have such a vehicle configuration that there is no VRGS actuator 400 in terms of the vehicle 10, i.e. a vehicle configuration allowing active control only of the rear wheel angle, or such a configuration that there is no ARS actuator 800, i.e. a vehicle configuration allowing active control only of the front wheel angle.

The braking control apparatus mounted on the vehicle 10 as configured above is provided with the ECU 100 for changing the limit of the left-right braking force difference of at least one of the front wheels and the rear wheels, in accordance with whether or not the active steering (the VGRS actuator 400 and the ARS actuator 800 herein) can operate.

The ECU 100 determines whether or not the active steering can operate, specifically, for example, by using whether or not a signal indicating predetermined information (e.g. a flag, etc.) is transmitted from a sensor (not illustrated) or the like which constitutes the active steering. The ECU 100 determines that the active steering can operate if the signal indicating the predetermined information is transmitted from the sensor or the like which constitutes the active steering, and the ECU 100 judges or determines that the active steering cannot operate if the signal indicating the predetermined information is not transmitted or communication is stopped.

Then, if it is judged that the active steering cannot operate, the ECU 100 increases (i.e. tightens) the limit of the left- right braking force difference of at least one of the front wheels and the rear wheels in comparison with the case where it is judged that the active steering can operate. In other words, if it is judged that the active steering can operate, the ECU 100 reduces (i.e. mitigates) the limit of the left- right braking force difference of at least one of the front wheels and the rear wheels in comparison with the case where it is judged that the active steering can operate.

The "ECU 100" in the first embodiment is one example of the "limiting device" and the "judging device" of the present invention. In other words, in the first embodiment, one portion of the function of the ECU 100 for various electronic control in the vehicle 10 is used as one portion of the braking control apparatus. Incidentally, in the first embodiment, the ECB 600 is controlled by the ECU 100, but if the ECB 600 is provided with its own control unit (e.g. a brake ECU, etc.), it may be judged by the control unit whether or not the active steering can operate.

(Operation of Braking Control Apparatus)

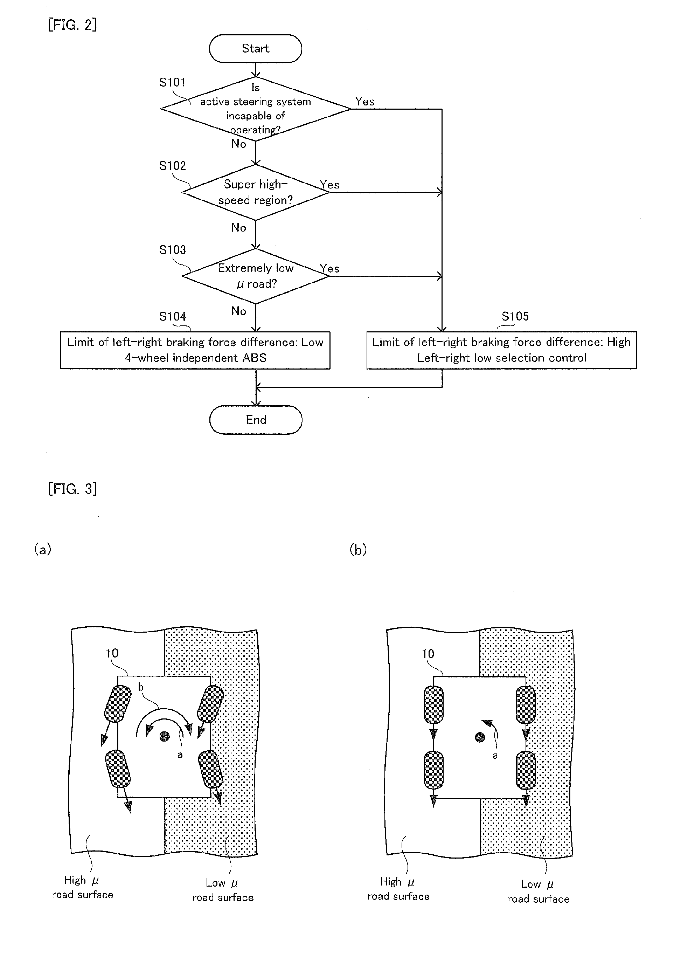

An explanation will be given to a case where braking control processing is started by the ECU 100 when the vehicle 10 drives on a split-$\mu$ road, with reference to a flowchart in FIG. 2. Here, it is assumed that the braking control processing is performed to realize a target slip angle 6 and a target yaw rate y.

In FIG. 2, if the braking control processing is started, firstly, the ECU 100 judges whether or not the active steering is incapable of operating (i.e. whether or the cooperative control between the active steering and the ECB 600 can be performed) (step S101). Incidentally, in the processing in the step S101, whether or not to be incapable of operating may be judged for each of the VGRS actuator 400 and the ARS actuator 800.

If it is judged that the active steering is not incapable of operating (the step S101: No), the ECU 100 judges whether or not the vehicle is driving in a super high-speed region (e.g. 80 km/h or more) in which established stability cannot be ensured only by the active steering (step S102).

If it is judged that the vehicle 10 is not driving in the super high-speed region (the step S102: No), the ECU 100 judges whether or not the vehicle is driving on an extremely low friction road (extremely low $\mu$ road), such as, for example, an icy road surface, in which the established stability is hardly ensured only by the active steering (step S103).

If it is judged that the vehicle 10 is not driving on the extremely low friction road (the step S103: No), the ECU 100 uses the following equation (1) to calculate each of a front-wheel steering wheel angle $\delta_f$, a rear-wheel steering wheel angle $\delta_r$, a front left-right braking force difference $F_f$, and a rear left-right braking force difference $F_r$, by which the target slip angle ß and the target yaw rate y are realized.

[Equation 1]

$$\begin{bmatrix} mVs + 2(K_f + K_r) & mV + \dfrac{2}{V}(l_f K_f - l_r K_r) \\ 2(l_f K_f - l_r K_r) & Is + \dfrac{2}{V}(l_f{}^2 K_f + l_r{}^2 K_r) \end{bmatrix} \begin{bmatrix} \beta \\ \gamma \end{bmatrix} = \begin{bmatrix} 2K_f & 2K_r & 0 & 0 \\ 2l_f K_f & -2l_r K_r & t & t \end{bmatrix} \begin{bmatrix} \delta_f \\ \delta_r \\ F_f \\ F_r \end{bmatrix}$$

$$(1)$$

, where m is weight of the vehicle, V is a vehicle body velocity, If is a vehicle central axis- front axle distance, $l_r$ is a vehicle central axis- rear axle distance, $K_f$ is front- wheel cornering power, and $K_r$ is rear- wheel cornering power.

Incidentally, there are not only one combination but also a plurality of combinations of the front- wheel steering wheel angle $\delta_f$, the rear- wheel steering wheel angle $\delta_r$, the front left- right braking force difference $F_f$, and the rear left- right braking force difference $F_r$, by which the target slip angle ß and the target yaw rate y are realized and which satisfy the equation (1) .

In the processing in the step S101 described above, since it is judged that the active steering is not incapable of operating, as illustrated in FIG. 3(a), yaw moment (refer to an arrow a) generated in the vehicle 10 due to the left-right braking force difference can be canceled or reduced by yaw moment (refer to an arrow b) generated by applying the wheel angle to each of the left front wheel FL, the right front wheel FR, the left rear wheel RL and the right rear wheel RR. Incidentally, FIGs. 3 are conceptual diagrams conceptually illustrating the yaw moment generated in the vehicle 10.

The ECU 100 selects one of the combinations of the front-wheel steering wheel angle $\delta_f$, the rear-wheel steering wheel angle $\delta_r$, the front left-right braking force difference $F_f$, and the rear left-right braking force difference $F_r$ which are calculated. On the basis of the selected combination, the ECU 100 controls the ECB 600 so as to respectively apply predetermined braking forces to the left front wheel FL, the right front wheel FR, the left rear wheel RL and the right rear wheel RR, and controls each of the VGRS actuator 400 and the ARS actuator 800 so as to respectively apply predetermined wheel angles to the left front wheel FL, the right front wheel FR, the left rear wheel RL and the right rear wheel RR (step S104).

Here, the combination selected by the ECU 100 is a combination which makes the left- right braking force difference relatively large within a limit range of the left- right braking force difference set in the ECB 600, and is a combination which can cancel, or reduce to the extent that the driver does not feel uncomfortable, the yaw moment generated due to the left- right braking force difference by using the yaw moment generated due to the active steering.

It is possible to generate the relatively large braking forces in the vehicle 10 while ensuring the stability of the vehicle 10.

If it is judged in the processing in the step S101 that the active steering is incapable of operating (the step S101: Yes), if it is judged in the processing in the step S102 that the vehicle 10 is driving in the super high-speed region (the step S102: Yes), or if it is judged in the processing in the step S103 that the vehicle 10 is driving on the extremely low μ road (the step S103: Yes), the ECU 100 increases (i.e. tightens) the limit of the left-right braking force difference so that the yaw moment generated in the vehicle 10 due to the left-right braking force difference does not cause the drive feel uncomfortable, because it is judged that the active steering is incapable of operating in the processing in the step S101. In other words, the ECU 100 performs left-right braking force difference limit control (i.e. yaw control).

Then, the ECU 100 uses the equation (1) described above to calculate each of the front- wheel steering wheel angle $\delta_f$, the rear- wheel steering wheel angle $\delta_r$, the front left- right braking force difference $F_f$, and the rear left- right braking force difference $F_r$, by which the target slip angle 6 and the target yaw rate y are realized. Incidentally, at this time, the ECU 100 may perform arithmetic operation by using a front- wheel steering wheel angle $\delta_f$ of 0 and a rear-wheel steering wheel angle $\delta_r$ of 0.

The ECU 100 selects a combination from the combinations of the front-wheel steering wheel angle $\delta_f$, the rear-wheel steering wheel angle $\delta_r$, the front left-right braking force difference $F_f$, and the rear left-right braking force difference $F_r$ which are calculated, wherein the selected combination is a combination in which the front-wheel steering wheel angle $\delta_f$ and the rear-wheel steering wheel angle $\delta_r$ are zero and which increases the left-right braking force difference as much as possible within the limit range of the left-right braking force difference which is tightened.

On the basis of the selected combination, the ECU 100 controls the ECB 600 so as to respectively apply the predetermined braking forces to the left front wheel FL, the right front wheel FR, the left rear wheel RL and the right rear wheel RR, and controls each of the VGRS actuator 400 and the ARS actuator 800 so as to respectively apply the predetermined wheel angles (which are zero herein) to the left front wheel FL, the right front wheel FR, the left rear wheel RL and the right rear wheel RR (step S105).

Incidentally, it is desirable that the ECB 600 is controlled such that the braking force difference between the left rear wheel RL and the right rear wheel RR is zero (so-called rear low select control).

As a result, as illustrated in FIG. 3(b), relatively small yaw moment (refer to an arrow a) is generated due to the left-right braking force difference in the vehicle 10. Thus, it is possible to apply the braking forces to the respective wheels without impairing the stability of the vehicle 10.

Incidentally, the processing in the steps S102 and S103 is for risk aversion. In other words, if the judgment is "Yes" in the steps S102 and S103, it is desirable to tighten the limit of the left- right braking force difference to give priority to ensuring the stability of the vehicle 10 even if the active steering can operate.

Incidentally, a four- wheel steering (4WS) vehicle is exemplified in the first embodiment; however, the braking control apparatus of the present invention can be also applied, for example, to a vehicle in which only the front wheels are steered.

<Second Embodiment>

A second embodiment of the braking control apparatus of the present invention will be explained. The second embodiment has the same configuration as that of the first embodiment, except that predetermined vehicle behavior is required. Thus, in the second embodiment, an explanation overlapping with the first embodiment will be omitted. Common portions on the drawings will carry the same reference numerals, and basically, only different points will be explained.

In the second embodiment, for example, if a brake pedal (not illustrated) is pressed by the driver, the ECU 100 detects, for example, a pressing amount of the brake pedal and calculates the vehicle behavior intended by the driver (e.g. the target slip angle, the target yaw rate, etc.).

Then, in accordance with the flowchart in FIG. 2 described above, the ECU 100 controls the ECB 600 so as to respectively apply the predetermined braking forces to the left front wheel FL, the right front wheel FR, the left rear wheel RL and the right rear wheel RR, and controls each of the VGRS actuator 400 and the ARS actuator 800 so as to respectively apply the predetermined wheel angles to the left front wheel FL, the right front wheel FR, the left rear wheel RL and the right rear wheel RR, thereby realizing the target slip angle and the target yaw rate which are calculated.

Alternatively, for example, if the target slip angle and the target yaw rate (i.e. the predetermined vehicle behavior) are instructed in the LKA control, the ECU 100 controls the ECB 600 so as to respectively apply the predetermined braking forces to the left front wheel FL, the right front wheel FR, the left rear wheel RL and the right rear wheel RR, and controls each of the VGRS actuator 400 and the ARS actuator 800 so as to respectively apply the predetermined wheel angles to the left front wheel FL, the right front wheel FR, the left rear wheel RL and the right rear wheel RR in accordance with the flowchart in FIG. 2 described above, thereby realizing the target slip angle and the target yaw rate which are instructed.

<Third Embodiment>

A third embodiment of the braking control apparatus of the present invention will be explained. The third embodiment has the same configuration as that of the first embodiment, except that the limit of the left-right braking force difference is mitigated according to necessity of rapid deceleration. Thus, in the third embodiment, an explanation overlapping with the first embodiment will be omitted. Common portions on the drawings will carry the same reference numerals, and basically, only different points will be explained.

In the second embodiment, the ECU 100 detects presence or absence of an obstacle ahead of the vehicle 10, for example, by analyzing an image taken by the in-vehicle camera 18. If the obstacle is detected ahead of the vehicle 10, the ECU 100 calculates a probability that the vehicle 10 crashes into the detected obstacle (i.e. the necessity of the rapid deceleration) on the basis of a distance between the detected obstacle and the vehicle 10, a velocity of the vehicle 10, and the like.

Incidentally, the "ECU 100" and the "necessity of the rapid deceleration" in the second embodiment are one example of the "rapid deceleration requirement obtaining device" and the "requirement degree of the rapid deceleration" of the present invention, respectively.

Then, the ECU 100 sets the target slip angle and the target yaw rate according to the necessity of the rapid deceleration, controls the ECB 600 so as to respectively apply the predetermined braking forces to the left front wheel FL, the right front wheel FR, the left rear wheel RL and the right rear wheel RR, and controls each of the VGRS actuator 400 and the ARS actuator 800 so as to respectively apply the predetermined wheel angles to the left front wheel FL, the right front wheel FR, the left rear wheel RL and the right rear wheel RR in accordance with the flowchart in FIG. 2 described above, thereby realizing the target slip angle and the target yaw rate which are set.

At this time, the ECU 100 mitigates or tightens the limit of the left-right braking force difference according to the necessity of the rapid deceleration.

Specifically, if the calculated necessity of the rapid deceleration is relatively high, the ECU 100 sets at least one of the target slip angle and the target yaw rate so as to increase the braking forces generated in the vehicle 10, for example, regardless of the pressing amount of the brake pedal by the driver (i.e. regardless of the degree of deceleration by the driver) . In other words, if the calculated necessity of the rapid deceleration is relatively high, the ECU 100 sets the target slip angle and the target yaw rate so as to reduce a braking distance of the vehicle 10 as much as possible even if the driver feels uncomfortable due to the yaw rate in the vehicle 10.

In this case, the ECU 100 mitigates the limit of the left-right braking force difference, and thus can generate relatively large braking forces in the vehicle 10. In addition, if the active steering can operate, it is possible to set a larger left-right braking force difference as described above. This results in a further reduction in the braking distance of the vehicle 10.

If the calculated necessity of the rapid is relatively low, and for example, if the pressing amount of the brake pedal by the driver is relatively large (i.e. if the requirement of the deceleration by the driver is relatively <u>high</u>), the ECU 100 performs the same processing as in the aforementioned case where the necessity of the rapid deceleration is relatively high.

If the calculated necessity of the rapid is relatively low, and for example, if the pressing amount of the brake pedal by the driver is also relatively small (i.e. if the requirement of the deceleration by the driver is relatively <u>low</u>), the ECU 100 changes at least one of the target slip angle ß and the target yaw rate y according to the calculated necessity of the rapid deceleration. In addition, the ECU 100 mitigates the limit of the left-right braking force difference according to the necessity of the rapid deceleration.

In other words, the ECU 100 changes at least one of the target slip angle 6 and the target yaw rate y so as to increase the braking forces as the necessity of the rapid deceleration increases, and increases the degree of the mitigation of the limit of the left-right braking force difference.

As a result, as the necessity of the rapid deceleration increases, larger braking forces can be generated in the vehicle 10. On the other hand, as the necessity of the rapid deceleration decreases, the stability of the vehicle can be prioritized.

The present invention is not limited to the aforementioned embodiments, but various changes may be made, if desired, without departing from the essence or spirit of the invention which can be read from the claims and the entire specification. A braking control apparatus, which involves such changes, is also intended to be within the technical scope of the present invention.

Description of Reference Codes

| FL, FR, RL, RR, | wheel |
|---|---|
| 10 | vehicle |
| 11 | propeller shaft |
| 12 | steering wheel |
| 13 | upper steering shaft |
| 14 | lower steering shaft |
| 15 | rack bar |
| 16 | steering wheel angle sensor |
| 17 | steering torque sensor |
| 100 | ECU |
| 200 | engine |
| 300 | braking / driving force distributing apparatus |
| 310 | center differential mechanism |
| 320 | front differential mechanism |
| 330 | rear differential mechanism |
| 400 | VGRS actuator |
| 500 | EPS actuator |
| 600 | ECB |
| 610 | brake actuator |
| 620FL, 620FR, 620RL, 620RR | braking apparatus |
| 800 | ARS actuator |

**Claims**

1. A braking control apparatus mounted on a vehicle comprising: a wheel angle varying device capable of changing a wheel angle of at least one of front wheels and rear wheels, independently of steering by a driver for facilitating a change in the wheel angle; a braking force varying device capable of changing a left-right braking force difference of at least one of the front wheels and the rear wheels; and a controlling device for controlling each of the wheel angle varying device and the braking force varying device, said braking control apparatus comprising:

   a limiting device for changing a limit of the left-right braking force difference of the at least one of the front wheels and the rear wheels in accordance with whether or not the wheel angle varying device can operate.

2. The braking control apparatus according to claim 1, wherein said limiting device increases the limit of the left-right braking force difference of the at least one of the front wheels and the rear wheels in a case where the wheel angle varying device cannot operate, in comparison with the limit of the left-right braking force difference of the at least one of the front wheels and the rear wheels in a case where the wheel angle varying device can operate.

3. The braking control apparatus according to claim 1 or 2, wherein said limiting device
   comprises a judging device for judging whether or not the wheel angle varying device can operate, and
   does not provide a limit to the left-right braking force difference of the at least one of the front wheels and the rear wheels in a case where it is judged that the wheel angle varying device can operate and provides a limit to the left-right braking force difference of the at least one of the front wheels and the rear wheels in a case where it is judged that the wheel angle varying device cannot operate.

4. The braking control apparatus according to any one of claims 1 to 3, wherein the controlling device controls at least one of the wheel angle varying device and the braking force varying device on the basis of required vehicle behavior if predetermined vehicle behavior is required.

5. The braking control apparatus according to any one of claims 1 to 4, wherein the controlling device
   comprises a rapid deceleration requirement obtaining device for obtaining a requirement degree of rapid deceleration of the vehicle, and
   controls at least one of the wheel angle varying device and the braking force varying device on the basis of the obtained requirement degree of the rapid deceleration.

6. The braking control apparatus according to any one of claims 1 to 5, wherein said limiting device changes the limit of the left-right braking force difference of the at least one of the front wheels and the rear wheels in accordance with the wheel angle varying device can operate when the vehicle is driving on a split-$\mu$ road surface.

[FIG. 1]

[FIG. 2]

```
                    ┌─────────────┐
                    │    Start    │
                    └──────┬──────┘
                           │
S101                       ▼
              ╱────────────────────────╲        Yes
             ╱    Is active steering     ╲──────────────┐
             ╲   system incapable of     ╱              │
              ╲      operating?         ╱               │
               ╲──────────┬────────────╱                │
                          │ No                          │
S102                      ▼                             │
              ╱───────────────────╲     Yes             │
             ╱    Super high-       ╲───────────────────┤
             ╲    speed region?    ╱                    │
              ╲─────────┬─────────╱                     │
                        │ No                            │
S103                    ▼                               │
              ╱───────────────────╲     Yes             │
             ╱   Extremely low      ╲──────────────────▶┤
             ╲      μ road?        ╱                    │
              ╲─────────┬─────────╱                     │
                        │ No                            │
   S104                 ▼                      S105      ▼
┌──────────────────────────────────┐   ┌──────────────────────────────────┐
│ Limit of left-right braking force │   │ Limit of left-right braking force │
│     difference: Low               │   │      difference: High             │
│   4-wheel independent ABS         │   │   Left-right low selection control│
└──────────────┬───────────────────┘   └───────────────┬──────────────────┘
               │                                        │
               └──────────────┬─────────────────────────┘
                              ▼
                       ┌─────────────┐
                       │     End     │
                       └─────────────┘
```

[FIG. 3]

(a)                                          (b)

High μ road surface          Low μ road surface          High μ road surface          Low μ road surface

## INTERNATIONAL SEARCH REPORT

| | International application No. |
|---|---|
| | PCT/JP2010/069606 |

**A. CLASSIFICATION OF SUBJECT MATTER**
*B60T8/1755*(2006.01)i, *B62D6/00*(2006.01)i

According to International Patent Classification (IPC) or to both national classification and IPC

**B. FIELDS SEARCHED**

Minimum documentation searched (classification system followed by classification symbols)
B60T8/1755, B62D6/00

Documentation searched other than minimum documentation to the extent that such documents are included in the fields searched
Jitsuyo Shinan Koho        1922-1996    Jitsuyo Shinan Toroku Koho    1996-2011
Kokai Jitsuyo Shinan Koho    1971-2011    Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 3-42361 A  (Nippondenso Co., Ltd.),<br>22 February 1991 (22.02.1991),<br>page 1, lower part, right, line 18 to page 2,<br>upper part, left, line 4; page 7, lower part,<br>right, lines 5 to 8; page 7, lower part, right,<br>line 16 to page 8, upper part, left, line 1<br>(Family: none) | 1-4,6<br>5 |
| X<br>Y | JP 9-123889 A  (Toyota Motor Corp.),<br>13 May 1997 (13.05.1997),<br>paragraph [0007]<br>(Family: none) | 1-4<br>5-6 |
| X<br>Y | JP 10-244928 A  (Toyota Motor Corp.),<br>14 September 1998 (14.09.1998),<br>paragraphs [0016] to [0018]<br>& US 6131688 A        & DE 19809192 A1 | 1-4<br>5-6 |

☒ Further documents are listed in the continuation of Box C.    ☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search<br>01 February, 2011 (01.02.11) | Date of mailing of the international search report<br>15 February, 2011 (15.02.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/069606

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-348799 A (Honda Motor Co., Ltd.), 21 December 1999 (21.12.1999), paragraphs [0002], [0011] to [0014] & US 6157892 A & DE 19926745 A1 | 5-6 |
| A | JP 5-330412 A (Mazda Motor Corp.), 14 December 1993 (14.12.1993), paragraphs [0008] to [0010] & US 5418727 A | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008110710 A
- JP HEI8142841 B